# EUROPEAN PATENT APPLICATION

(11) **EP 4 838 638 A1**
(43) Date of publication of application: **11.11.2026**
(21) Application number: 26150265.2
(22) Date of filing: 05.01.2026
(51) Int. Cl.: H01M 50/103, H01M 50/202, H01M 50/247, H01M 50/289

(54) **BATTERY TAPE AND BATTERY ATTACHED WITH THE SAME**

(30) Priority: 08.05.2025 KR 20250059942
(71) Applicant: Samsung SDI Co., Ltd., Yongin-si, Gyeonggi-do 17084 (KR)
(72) Inventor: HWANG, Jiyeong, Yongin-si, 17084 (KR)
(74) Representative: Marks & Clerk LLP

(57) **Abstract**

A battery tape (100) comprises:

a base attachment portion (200) configured to be attached to a first surface (21) of a battery cell (20);

a first side attachment portion (300) extending from one side of the base attachment portion (200), and configured to be attached to one side of a second surface (22) of the battery cell (20), the second surface (22) being opposite to the first surface (21) of the battery cell (20); and

a second side attachment portion (400) extending from another side of the base attachment portion (200), and configured to be attached to another side of the second surface (22) of the battery cell (20),

wherein the base attachment portion (200) comprises a notch portion (230) in at least one of a plurality of corner regions of the base attachment portion (200).

## Description

### BACKGROUND

### 1. Field

The present disclosure relates to a battery tape, and a battery to which the battery tape is attached.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In the case of batteries used in portable small electronic devices, the batteries may be configured to be detachable from the electronic devices by a user for replacement as needed. A pull tab tape may be attached to a battery so that the battery can be detached from an electronic device. A user may pull the pull tab tape to detach the battery from the electronic device. When a torsional load is applied to a battery to which a pull tab tape is attached, there is a problem in that a portion of the pull tab tape separates from a battery cell or an adhesive force thereof weakens, thereby causing noise.

The above information disclosed in this Background section is for enhancement of understanding of the background of the present disclosure, and therefore, it may contain information that does not constitute related (or prior) art.

### SUMMARY

Embodiments of the present disclosure are directed to a battery tape, and a battery to which the battery tape is attached.

These and other aspects and features of the present disclosure will be described in or will be apparent from the following description of embodiments of the present disclosure.

According to one aspect of the present disclosure, a battery tape includes: a base attachment portion configured to be attached to a first surface of a battery cell; a first side attachment portion extending from one side of the base attachment portion, and configured to be attached to one side of a second surface of the battery cell, the second surface being opposite to the first surface of the battery cell; and a second side attachment portion extending from another side of the base attachment portion, and configured to be attached to another side of the second surface of the battery cell. The base attachment portion includes a notch portion in, e.g. formed in, at least one of a plurality of corner regions of the base attachment portion.

In an embodiment, the notch portion may include a notch hole penetrating the base attachment portion.

In an embodiment, the notch portion may include a notch groove in the base attachment portion.

In an embodiment, a corner region among the plurality of corner regions of the base attachment portion may be defined by a first outer line in a horizontal direction and a second outer line in a vertical direction, and the notch portion may be located in an inner region of the first outer line and the second outer line.

In an embodiment, the second outer line may be a portion connected to the first side attachment portion or the second side attachment portion, and the first outer line may be a portion perpendicular to the second outer line.

In an embodiment, the notch portion may be located on a reference line that forms an angle with the first outer line, and having a center that may be spaced from the second outer line by a distance.

In an embodiment, the reference line may form a right triangle with the first outer line and the second outer line, the first outer line and the second outer line may form a right angle of the right triangle, and the reference line may correspond to a hypotenuse of the right triangle.

In an embodiment, the reference line may form the angle between 45 degrees to 60 degrees with the first outer line.

In an embodiment, the center of the reference line may be spaced from the second outer line by a length of 5% to 15% with respect to a length of the first outer line.

In an embodiment, a length of the notch portion may be greater than 0% and less than or equal to 70% with respect to a length of the reference line.

In an embodiment, the notch portion may have a symmetrical shape with respect to the center of the reference line.

In an embodiment, the notch portion may extend in one direction, and opposite ends of the notch portion may be rounded.

In an embodiment, the base attachment portion may have a rectangular shape, and the notch portion may be located in at least one of four corner regions of the plurality of corner regions of the base attachment portion.

According to a second aspect of the present disclosure, a battery includes: a battery cell; and a battery tape attached to the battery cell, the battery tape including: a base attachment portion attached to a first surface of the battery cell; a first side attachment portion extending from one side of the base attachment portion, and attached to one side of a second surface of the battery cell, the second surface being opposite to the first surface of the battery cell; and a second side attachment portion extending from another side of the base attachment portion, and attached to another side of the second surface of the battery cell. The base attachment portion includes a notch portion in at least one of a plurality of corner regions of the base attachment portion.

In an embodiment, a corner region among the plurality of corner regions of the base attachment portion may be defined by a first outer line in a horizontal direction and a second outer line in a vertical direction, and the notch portion may be located in an inner region of the first outer line and the second outer line.

In an embodiment, the notch portion may be located on a reference line that forms an angle with the first outer line, and having a center that may be spaced from the second outer line by a distance.

In an embodiment, the notch portion may extend in one direction, and opposite ends of the notch portion may be rounded.

In an embodiment, the battery may further include a set tape attached to an opposite surface of the base attachment portion from that attached to the first surface of the battery cell.

In an embodiment, at least a portion of the set tape may overlap with the notch portion.

In an embodiment, the notch portion may include a portion overlapping with the set tape, and opposite ends of the notch portion may not overlap with the set tape.

According to some embodiments of the present disclosure, by forming a notch portion in a region of a battery tape where an adhesive force with a battery cell weakens or separates when a torsional load is applied to a battery, an occurrence of a noise may be prevented or substantially prevented.

According to some embodiments of the present disclosure, when a set tape is attached on a battery tape having a notch portion, both ends (e.g., opposite ends) of the notch portion may be disposed outside of the set tape, thereby further preventing or substantially preventing the occurrence of a noise from the notch portion due to an adhesive force of the set tape.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a plan view illustrating an example of a battery tape according to some embodiments of the present disclosure.
FIG. 2 is a plan view illustrating an example in which a notch portion is additionally formed in a battery tape according to some embodiments of the present disclosure.
FIG. 3 is an enlarged view illustrating an example of the region A in FIG. 1.
FIG. 4 illustrates an example of a notch portion in a battery tape according to some embodiments of the present disclosure.
FIG. 5 is a perspective view illustrating an example of applying a torsional load to a battery to set a position of a notch portion in a battery tape according to some embodiments of the present disclosure.
FIG. 6 illustrates a region where an adhesive force may be weakened in a base attachment portion of a battery tape due to the applying of the torsional load of FIG. 5.
FIG. 7 illustrates analysis data showing an adhesive force of a battery tape for an applied torsional load of FIG. 5.
FIG. 8 illustrates an example of setting a reference line for forming a notch portion in a battery tape according to some embodiments of the present disclosure.
FIG. 9 illustrates an example of setting a length of a notch portion in a battery tape according to some embodiments of the present disclosure.
FIG. 10 is an exploded perspective view illustrating an example of a battery according to some embodiments of the present disclosure.
FIG. 11 is a plan view illustrating an example of a battery according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

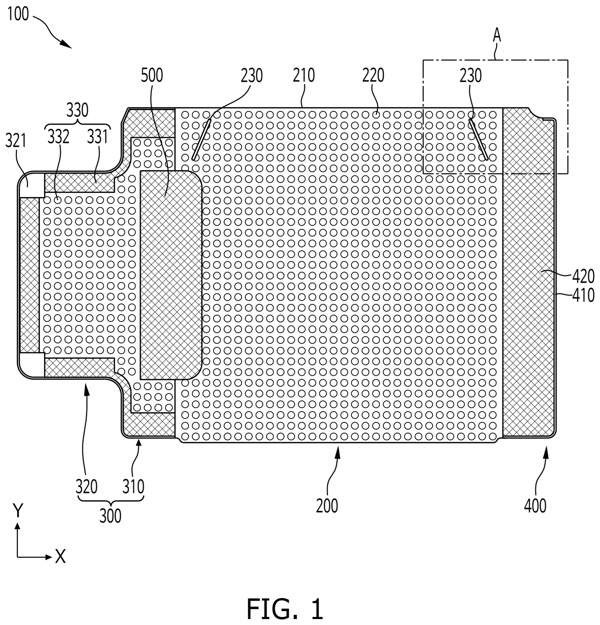

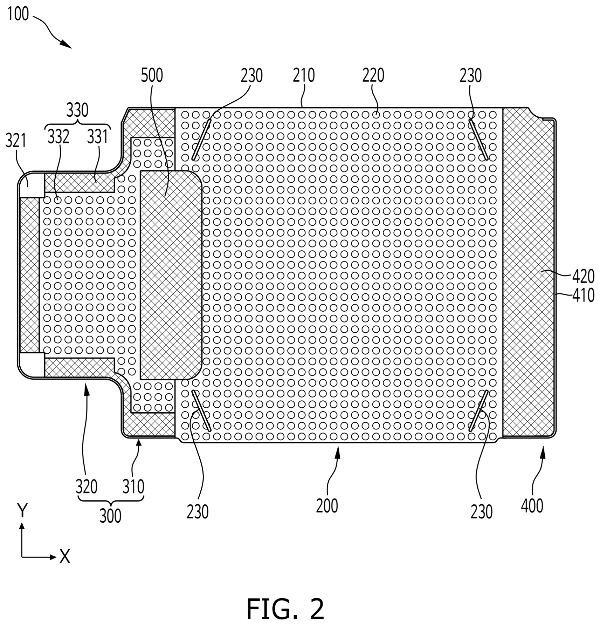

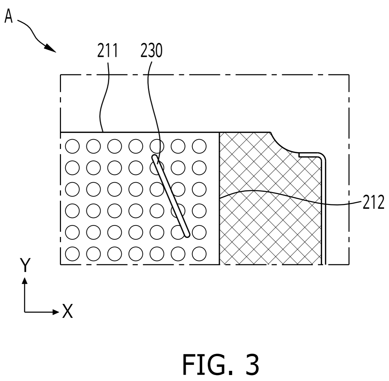

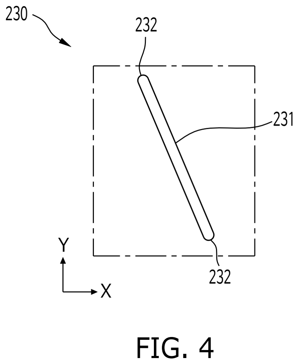

FIG. 1 is a plan view illustrating an example of a battery tape 100 according to some embodiments of the present disclosure. FIG. 2 is a plan view illustrating an example in which a notch portion 230 is additionally formed in a battery tape 100 according to some embodiments of the present disclosure. FIG. 3 is an enlarged view illustrating an example of the region A in FIG. 1. FIG. 4 illustrates an example of a notch portion 230 in a battery tape 100 according to some embodiments of the present disclosure.

Referring to FIGS. 1-4, a battery tape 100 according to some embodiments of the present disclosure includes a base attachment portion 200 to be attached to at least a portion of a first surface of a battery cell, a first side attachment portion 300 extending from one side of the base attachment portion 200 to be attached to one side of a second surface of the battery cell opposite to the first surface of the battery cell, and a second side attachment portion 400 extending from another side (e.g., an opposite side) of the base attachment portion 200 to be attached to another side (e.g., an opposite side) of the second surface of the battery cell. The base attachment portion 200 includes a notch portion 230 formed in at least one of a plurality of corner regions.

The base attachment portion 200 may include a base attachment portion body 210 formed in a suitable shape corresponding to the first surface of the battery cell, a base adhesive layer 220 formed on one surface of the base attachment portion body 210 to be attached to the first surface of the battery cell, and the notch portion 230 formed in at least one of the plurality of corner regions of the base attachment portion body 210.

As an example, when the first surface of the battery cell is formed in a rectangular shape, the base attachment portion body 210 may also be formed in a rectangular shape of a corresponding shape and size. The base attachment portion body 210 may be formed in a suitable shape and size that covers the entire or substantially the entire first surface of the battery cell.

When the base attachment portion body 210 is formed in a rectangular shape, the base adhesive layer 220 may be formed on an entire or substantially an entire area of one surface of the base attachment portion body 210. The entire area of one surface of the base attachment portion body 210 may be formed to be attached to the entire first surface of the battery cell.

The notch portion 230 may be formed in at least one of four corners of the rectangular base attachment portion body 210. As an example, the notch portion 230 may be formed in two upper corner regions among the four corners of the base attachment portion body 210, as illustrated in FIG. 1. The notch portion 230 may be formed on both (e.g., opposite) side corners in a first direction X at an upper side of the base attachment portion body 210 based on a second direction Y, as illustrated in FIG. 1.

According to some embodiments, the notch portion 230 may also be formed in all of the four corner regions of the base attachment portion body 210, as illustrated in FIG. 2. The notch portion 230 may be formed on both (e.g., opposite) side corners in the first direction X at an upper side and a lower side of the base attachment portion body 210 based on the second direction Y, as illustrated in FIG. 2.

As an example, a corner region of the base attachment portion 200 may be formed by a first outer line 211 extending in the first direction X, and a second outer line 212 extending in the second direction Y. The notch portion 230 may be formed in an inner region of the first outer line 211 and the second outer line 212. The second outer line 212 may be provided as a pair. The second outer line 212 formed on a left side in the first direction X may be a boundary portion where the base attachment portion body 210 and the first side attachment portion 300 are connected to each other. The second outer line 212 formed on a right side in the first direction X may be a boundary portion where the base attachment portion body 210 and the second side attachment portion 400 are connected to each other. The first outer line 211 may be a portion perpendicular to or substantially perpendicular to the second outer line 212.

When a torsional load is applied to the battery cell, an adhesive force of the base adhesive layer 220 may weaken, or the base adhesive layer 220 may separate from the battery cell in at least one region among the four corner regions of the base attachment portion body 210. In this case, a noise may occur in a portion where the adhesive force of the base attachment portion body 210 weakens or separates.

Therefore, by forming the notch portion 230 in at least one of the four corner regions where a weakening or a separation of the adhesive force may occur in the base attachment portion body 210, an occurrence of the noise may be prevented or substantially prevented.

As an example, the notch portion 230 may be a notch hole penetrating the base attachment portion 200, or a notch groove formed in the base attachment portion 200. The notch portion 230 may also be a form in which an adhesive layer is not formed.

In some embodiments, the notch portion 230 may be formed to extend in one direction, and both ends (e.g., opposite ends) thereof may be formed to be rounded. As an example, referring to FIG. 4, the notch portion 230 may include a notch portion body 231 in a form of a long and thin slit extending in one direction, and a curved portion 232 formed to be rounded at both ends (e.g., opposite ends) of the notch portion body 231. In some embodiments, the notch portion body 231 may be formed in a direction that is inclined with respect to the first direction X and the second direction Y. A direction in which the notch portion body 231 extends may be formed along a direction in which an adhesive force may weaken or separate in the base attachment portion body 210. The curved portion 232 may be formed in a semicircular shape or an elliptical shape. However, the present disclosure is not limited thereto, and the notch portion 230 may be formed in a rectangular shape having four corner portions formed to be rounded. The notch portion 230 may be formed so that there is no angled shape. When a torsional load is repeatedly applied to the battery cell, a tensile force and a compressive force may repeatedly occur in a region where the notch portion 230 is formed, so if there is an angled shape in the notch portion 230, a stress may be concentrated so that the notch portion 230 may be torn. Therefore, both ends (e.g., opposite ends) of the notch portion 230 may be formed to be rounded to prevent or substantially prevent damage to the notch portion 230.

The first side attachment portion 300 may include a first side attachment portion body 310 extending to the other side of the base attachment portion 200, and a grip portion 320 extending from the first side attachment portion body 310. According to some embodiments, the first side attachment portion 300 may be formed to extend to a left side of the base attachment portion 200 along the first direction X with reference to FIG.s 1 and 2.

The first side attachment portion body 310 may be formed to have a same or similar size as that of the base attachment portion 200 in a height direction (e.g., the Y direction), which is perpendicular to or substantially perpendicular to a width direction (e.g., the X-direction) that is a direction extending from the base attachment portion 200. The first side attachment portion body 310 may be attached to the other side of the second surface of the battery cell, while surrounding (e.g., around a periphery of) the other side surface of the battery cell after the base attachment portion 200 is attached to the first surface of the battery cell.

The grip portion 320 extends in the width direction from the first side attachment portion body 310, and a size of the grip portion 320 in the height direction may be formed to be smaller than a size of the first side attachment portion body 310 in the height direction.

A first adhesive layer 330 may be formed on the first side attachment portion body 310 and the grip portion 320. As an example, the first adhesive layer 330 may include a stronger adhesive layer 331 and a weaker adhesive layer 332. The stronger adhesive layer 331 may be formed along a circumference of the first side attachment portion body 310 and the grip portion 320, and the weaker adhesive layer 332 may be formed inside the stronger adhesive layer 331. However, a position where the stronger adhesive layer 331 and the weaker adhesive layer 332 are formed is not limited thereto, and positions where the stronger adhesive layer 331 and the weaker adhesive layer 332 are formed may be variously modified as needed or desired.

In some embodiments, a non-adhesive region 321 where a second adhesive layer is not formed may be located at both side (e.g., opposite side) corner portions of an end of the grip portion 320. The non-adhesive region 321 may be a region provided for a user to more easily separate the grip portion 320 from the battery cell. The grip portion 320 separated from the battery cell may be a configuration that a user may hand hold and pull when detaching a battery from an electronic device.

The second side attachment portion 400 may include a second side attachment portion body 410 extending to one side of the base attachment portion 200, and a second adhesive layer 420 formed on one surface of the second side attachment portion body 410 to be attached to one side of the second surface of the battery cell. The second adhesive layer 420 may be formed on an entire or substantially any entire surface of the one surface of the second side attachment portion body 410, or may be formed on a part thereof. According to some embodiments, the second side attachment portion 400 may be formed to extend to a right side of the base attachment portion 200 along the first direction X with reference to FIG.s 1 and 2.

The second side attachment portion body 410 may be formed to have a same or similar size as that of the base attachment portion 200 in a height direction, which is a direction perpendicular to or substantially perpendicular to a width direction that is a direction extending from the base attachment portion 200. The second side attachment portion body 410 may be attached to one side of the second surface of the battery cell, while surrounding (e.g., around a periphery of) the one side surface of the battery cell after the base attachment portion 200 is attached to the first surface of the battery cell. As an example, the second adhesive layer 420 may be formed on an entire or substantially entire one surface of the second side attachment portion body 410.

The battery tape 100 may further include a stronger adhesion portion 500 formed by connecting the base attachment portion 200 and the first side attachment portion 300 to each other. The stronger adhesion portion 500 may be formed partially on the base attachment portion body 210 and partially on the first side attachment portion body 310 along the first direction X, which is a direction in which the first side attachment portion 300 extends from the base attachment portion 200. The stronger adhesion portion 500 may be formed to have a smaller size than that of the base attachment portion body 210 and the first side attachment portion body 310 in the second direction Y, which is a direction perpendicular to or substantially perpendicular to the first direction X. The stronger adhesion portion 500 may be formed in a central region of the base attachment portion body 210 and the first side attachment portion body 310 in the second direction Y. The stronger adhesion portion 500 may be formed to be spaced apart from the stronger adhesive layer 331 formed along an outermost circumference of the first side attachment portion body 310 by a suitable distance (e.g., a predetermined distance).

In some embodiments, the stronger adhesion portion 500 may be formed of an adhesive layer having a stronger adhesive force than those of the base adhesive layer 220 and the weaker adhesive layer 332 of the first adhesive layer 330. The stronger adhesion portion 500 may be formed to have a same or similar adhesive force as that of the stronger adhesive layer 331 of the first adhesive layer 330 and that of the second adhesive layer 420.

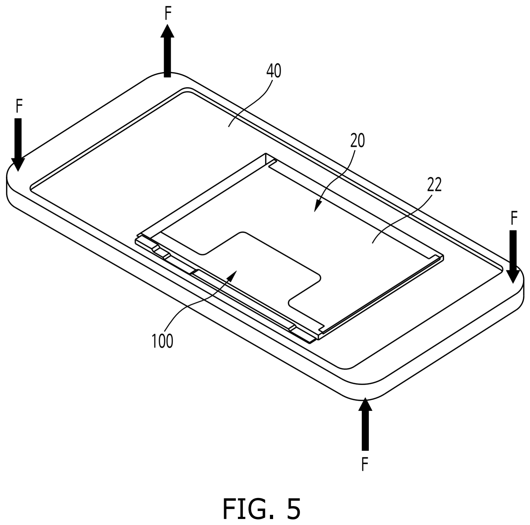

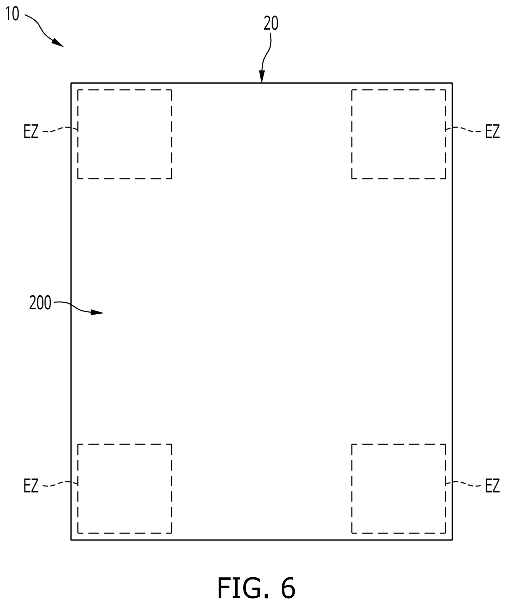

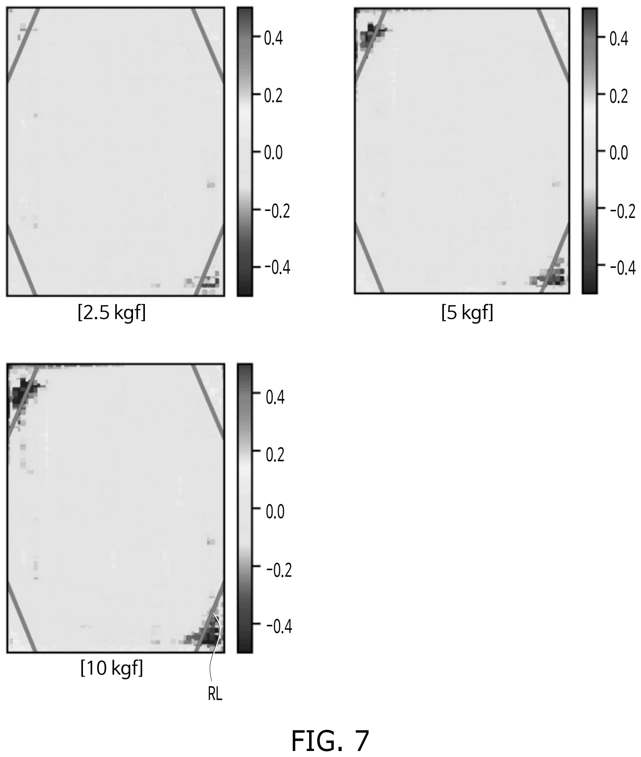

FIG. 5 is a perspective view illustrating an example of applying a torsional load to a battery to set a position of a notch portion 230 in a battery tape 100 according to some embodiments of the present disclosure. FIG. 6 illustrates a region where an adhesive force may be weakened in a base attachment portion 200 of a battery tape 100 due to the applying of the torsional load of FIG. 5. FIG. 7 illustrates analysis data showing an adhesive force of a battery tape 100 for an applied torsional load of FIG. 5.

Referring to FIGS. 5-7, after coupling a battery 10 to a jig 40, a load F is applied to four corner portions of the jig 40 to apply a torsional load to the battery 10. As an example, the jig 40 may be an electronic device to which the battery 10 is coupled. Among the four corners of the jig 40, two corner portions located diagonally from each other may apply the load F in the same direction as each other, and adjacent corner portions may apply the load F in different directions from each other to apply the torsional load to the jig 40.

When the torsional load is repeatedly applied to the jig 40, a tensile force and a compressive force are repeatedly generated in four corner regions EZ of the battery 10, so that a portion where an adhesive force between the base attachment portion 200 and a battery cell 20 may be weakened or may separate in the four corner regions EZ of the battery 10.

FIG. 7 illustrates data analyzing an adhesive force between the base attachment portion 200 and the battery cell 20 when torsional loads of 2.5 kgf, 5 kgf, and 10 kgf are applied to a battery. As illustrated in FIG. 7, as the torsional load applied to the battery increases, the adhesive force in the corner region may become weaker and weaker. FIG. 7 illustrates result data of applying a torsional load in a load direction as illustrated in FIG. 5, and shows that the adhesive force becomes weaker and weaker in two corner regions. For example, if a torsional load is repeatedly applied in the load direction as illustrated in FIG. 5 and an opposite direction thereof, a portion where an adhesive force is weakened or separates may occur in all four corner regions. As the torsional load applied to the battery increases, an area of a region where the adhesive force weakens in the four corner regions increases. The region where the adhesive force weakens in the four corner regions is formed along a reference line RL. Using the analysis data, a position of the reference line RL may be determined (e.g., may be set), and a position for forming a notch portion may be determined (e.g., may be set). A method for setting the reference line for forming the notch portion will be described in more detail below.

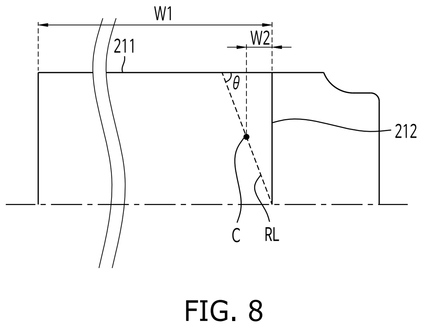

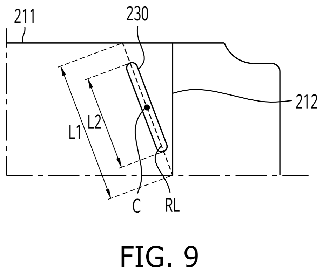

FIG. 8 illustrates an example of setting a reference line RL for forming a notch portion 230 in a battery tape 100 according to some embodiments of the present disclosure. FIG. 9 illustrates an example of setting a length of a notch portion 230 in a battery tape 100 according to some embodiments of the present disclosure.

Referring to FIGS. 8 and 9, the notch portion 230 may be formed on a reference line RL that forms an angle (e.g., a predetermined angle) θ with a first outer line 211, and having a center C that is spaced apart from a second outer line 212 by a distance (e.g., a predetermined distance) W2. As an example, when a base attachment portion (e.g. 200, FIG.s 1 and 2) is in a rectangular shape, the first outer line 211 and the second outer line 212 may form a right angle, and the reference line RL may correspond to a hypotenuse, so that the reference line RL may form a right triangle shape with the first outer line 211 and the second outer line 212.

A position of the reference line RL may vary depending on a size and thickness of a battery, a kind of an electronic device to which the battery is coupled, and the like. The position of the reference line RL may be determined (e.g., may be set) to be located in a portion where an adhesive force weakens through an experiment of applying a torsional load to the electronic device, or through analysis data such as that illustrated in FIG. 7.

As an example, the reference line RL may be formed to form an angle θ between 45 degrees to 60 degrees with the first outer line 211. If the reference line RL is formed at less than 45 degrees or greater than 60 degrees with respect to the first outer line 211, a position error with a portion where an adhesive force weakens may occur greatly, so that an effect of preventing an occurrence of a noise may be reduced.

The reference line RL may be formed so that a center C thereof is spaced apart from the second outer line 212 by a length W2 of 5% to 15% with respect to a length W1 of the first outer line 211. If a length W2 by which the center C of the reference line RL is spaced apart from the second outer line 212 with respect to the length W1 of the first outer line 211 is formed to be less than 5% or greater than 15%, a position error with a portion where an adhesive force weakens may occur greatly, so that an effect of preventing an occurrence of a noise may be reduced.

The angle θ that the reference line RL forms with the first outer line 211 and the distance W2 by which the reference line RL is spaced apart from the second outer line 212 are not limited thereto, and may vary depending on a size and thickness of a battery, a kind of an electronic device to which the battery is coupled, and the like.

The notch portion 230 formed along the reference line RL may be formed in a symmetrical shape with respect to the center C of the reference line RL. A length L2 of the notch portion 230 may be formed with a length greater than 0% and less than or equal to 70% with respect to a length L1 of the reference line RL. When a torsional load is applied to a battery, if a portion where an adhesive force of a base attachment portion weakens is formed widely along the reference line RL, the length L2 of the notch portion 230 may be formed to be relatively longer along the reference line RL. In some embodiments, if a portion where an adhesive force of a base attachment portion weakens is formed narrowly along the reference line RL, the length L2 of the notch portion 230 may be formed to be relatively smaller along the reference line RL.

In some embodiments, the length L2 of the notch portion 230 may be formed with a length of 50% to 70% with respect to the length L1 of the reference line RL. If the length L2 of the notch portion 230 is formed to be less than 50% of the length L1 of the reference line RL, an effect of preventing an occurrence of a noise may be insignificant. If the length L2 of the notch portion 230 exceeds 70% of the length L1 of the reference line RL, an adhesive force or a strength of a portion where the notch portion 230 is formed may be weakened, so that the portion may be easily damaged.

A width of the notch portion 230 may be formed to a size corresponding to or smaller than a region where an adhesive force weakens along the reference line RL. In some embodiments, the width of the notch portion 230 may be formed to be 1 mm to 3 mm. If the width of the notch portion 230 is formed to be less than 1 mm, an effect of preventing an occurrence of a noise may be insignificant. If the width of the notch portion 230 exceeds 3 mm, an adhesive force or a strength of a portion where the notch portion 230 is formed may be weakened, so that the portion may be easily damaged.

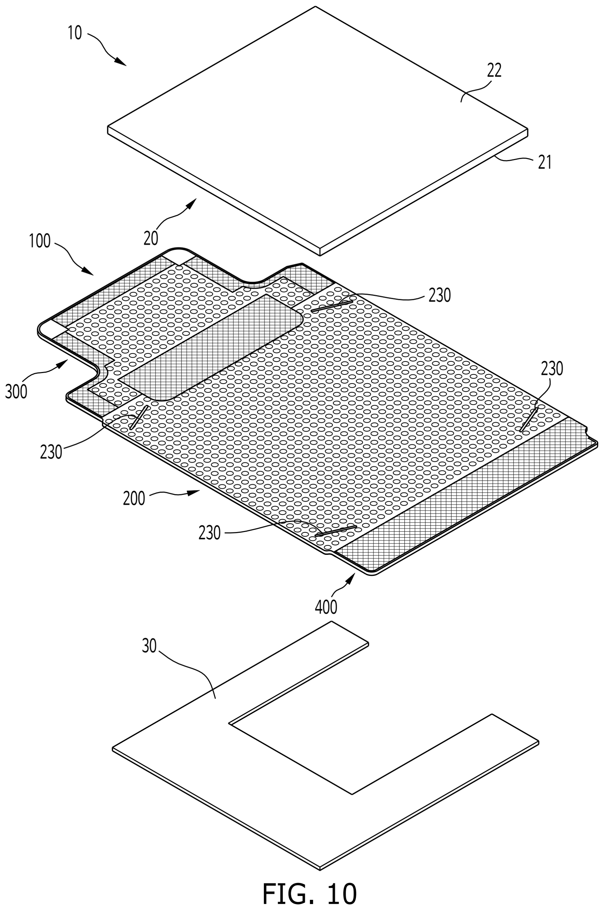

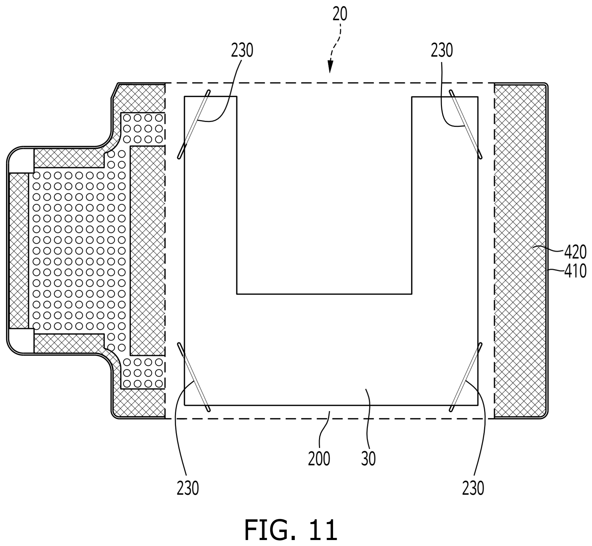

FIG. 10 is an exploded perspective view illustrating an example of a battery 10 according to some embodiments of the present disclosure. FIG. 11 is a plan view illustrating an example of a battery 10 according to some embodiments of the present disclosure.

Referring to FIGS. 10 and 11, a battery 10 according to some embodiments of the present disclosure may include a battery cell 20 that may be charged and discharged, and supplies power to an electronic device. A battery tape 100 may be attached to a surface of the battery cell 20. The battery tape 100 may be coupled to an electronic device together with the battery cell 20 in a state of being attached to the battery cell 20. When detaching the battery 10 from the electronic device, the battery 10 may be detached from the electronic device by pulling a portion of the battery tape 100 attached to the battery cell 20.

The battery tape 100 may include a base attachment portion 200, a first side attachment portion 300, and a second side attachment portion 400. The base attachment portion 200 may be attached to a first surface 21 of the battery cell 20. The first side attachment portion 300 may extend from one side of the base attachment portion 200, and may be attached to one side of a second surface 22 of the battery cell 20, which is an opposite surface of the first surface 21 of the battery cell 20. The second side attachment portion 400 may extend from another side (e.g., an opposite side) of the base attachment portion 200, and may be attached to another side (e.g., an opposite side) of the second surface 22 of the battery cell 20. The shapes of the base attachment portion 200, the first side attachment portion 300, and the second side attachment portion 400 may be the same as those of the base attachment portion 200, the first side attachment portion 300, and the second side attachment portion 400 described above with reference to FIGS. 1 and 2, and thus, redundant description thereof may not be repeated.

As an example, the base attachment portion 200 may include a base attachment portion body 210 formed in a suitable shape corresponding to the first surface 21 of the battery cell 20, a base adhesive layer 220 formed on one surface of the base attachment portion body 210 and attached to the first surface 21 of the battery cell 20, and a notch portion 230 formed in at least one of a plurality of corner regions of the base attachment portion body 210.

As an example, when the first surface 21 of the battery cell 20 is formed in a rectangular shape, the base attachment portion 200 may also be formed in a rectangular shape of a corresponding shape and size. The base attachment portion 200 may be formed in a suitable shape and size that covers an entire or substantially entire first surface 21 of the battery cell 20.

When the base attachment portion 200 is formed in a rectangular shape, a base adhesive layer 220 may be formed on an entire area of one surface of the base attachment portion body 210. The entire area of one surface of the base attachment portion body 210 may be formed to be attached to an entire first surface 21 of the battery cell 20.

The base attachment portion 200 may include a notch portion 230 formed in at least one of a plurality of corner regions. When a torsional load is applied to the battery cell 20, an adhesive force of a base adhesive layer 220 may be weakened, or the base adhesive layer 220 may separate from the battery cell 20 in at least one region among four corner regions of the base attachment portion 200. In this case, a noise may occur in a portion where the adhesive force of the base attachment portion 200 is weakened or separated.

Therefore, by forming the notch portion 230 in at least one of the four corner regions where a weakening or a separation of an adhesive force may occur in the base attachment portion 200, an occurrence of a noise may be prevented or substantially prevented.

As an example, a corner region of the base attachment portion 200 may be formed by a first outer line in a horizontal direction and a second outer line in a vertical direction, and the notch portion 230 may be formed in an inner region of the first outer line and the second outer line. When the base attachment portion 200 is formed in a rectangular shape, the notch portion 230 may be formed in four corner regions of the base attachment portion 200.

As an example, the notch portion 230 may be formed on a reference line that forms an angle (e.g., a predetermined angle) with a first outer line, and having a center that is spaced apart from a second outer line by a distance (e.g., a predetermined distance). A method for setting or determining a position of the reference line is the same as that of the method described above with reference to FIGS. 8 and 9, and thus, redundant description thereof may not be repeated.

The notch portion 230 may be formed to extend in one direction, and both ends (e.g., opposite ends) thereof may be formed to be rounded. The notch portion 230 may be formed in a long and thin slit shape along a length direction of the reference line. To prevent or substantially prevent damage to the notch portion 230, both ends (e.g., opposite ends) of the notch portion 230 may be formed to be rounded so that there is no angled shape.

The battery 10 according to some embodiments of the present disclosure may further include a set tape 30 attached to an opposite surface of the base attachment portion 200 that is attached to the first surface 21 of the battery cell 20. The set tape 30 may be for attaching the battery 10 to an object to which the battery 10 is coupled. As an example, when the battery 10 is coupled to an electronic device, the set tape 30 may be attached to the electronic device to fix the battery 10. As such, the set tape 30 may be formed to have an adhesive force on both surfaces thereof.

The battery tape 100 may be attached to the battery cell 20 in a state in which the set tape 30 is first attached to an opposite surface of the base attachment portion 200 that is attached to the first surface 21 of the battery cell 20. In some embodiments, after the battery tape 100 is first attached to the battery cell 20, the set tape 30 may be attached to an opposite surface of the base attachment portion 200 from that attached to the first surface 21 of the battery cell 20.

When the set tape 30 is attached to the base attachment portion 200, the set tape 30 may be formed so that at least a portion thereof is disposed on the notch portion 230. The set tape 30 may be formed to be smaller than the base attachment portion 200, and at least a portion thereof may be disposed on the notch portion 230.

As an example, as illustrated in FIG. 11, the set tape 30 may be formed in a C-shape or a U-shape. When the set tape 30 is attached on the base attachment portion 200, an outer corner portion of the set tape 30 may be disposed on the notch portion 230 formed at four corners of the base attachment portion 200. In this case, a portion of the set tape 30 is disposed on the notch portion 230, and both ends (e.g., opposite ends) of the notch portion 230 may be formed to be disposed outside of the set tape 30. If an end of the notch portion 230 is located inside the set tape 30, an effect of preventing an occurrence of noise by an adhesive force of the set tape 30 may be reduced. Therefore, both ends (e.g., opposite ends) of the notch portion 230 may be formed to be disposed outside of the set tape 30.

Although the present disclosure has been described with reference to embodiments and drawings illustrating aspects thereof, the present disclosure is not limited thereto. Various modifications and variations can be made by a person skilled in the art to which the present disclosure belongs within the scope of the technical scope of the present disclosure and the claims and their equivalents, below.

## Claims

1. A battery tape (100) comprising:
a base attachment portion (200) configured to be attached to a first surface (21) of a battery cell (20);
a first side attachment portion (300) extending from one side of the base attachment portion (200), and configured to be attached to one side of a second surface (22) of the battery cell (20), the second surface (22) being opposite to the first surface (21) of the battery cell (20); and
a second side attachment portion (400) extending from another side of the base attachment portion (200), and configured to be attached to another side of the second surface (22) of the battery cell (20),
wherein the base attachment portion (200) comprises a notch portion (230) in at least one of a plurality of corner regions of the base attachment portion (200).

2. The battery tape (100) as claimed in claim 1, wherein the notch portion (230) comprises a notch hole penetrating the base attachment portion (200).

3. The battery tape (100) as claimed in claim 1, wherein the notch portion (230) comprises a notch groove in the base attachment portion (200).

4. The battery tape (100) as claimed in claim 1, 2 or 3, wherein a corner region among the plurality of corner regions of the base attachment portion (200) is defined by a first outer line (211) in a horizontal direction and a second outer line (212) in a vertical direction, and
the notch portion (230) is located in an inner region of the first outer line (211) and the second outer line (212).

5. The battery tape (100) as claimed in claim 4, wherein the second outer line (212) is a portion connected to the first side attachment portion (300) or the second side attachment portion (400), and
the first outer line (211) is a portion perpendicular to the second outer line (212).

6. The battery tape (100) as claimed in claim 4 or 5, wherein the notch portion (230) is located on a reference line (RL) that forms an angle (θ) with the first outer line (211), and having a center that is spaced from the second outer line (212) by a distance (W2).

7. The battery tape (100) as claimed in claim 6, wherein the reference line (RL) forms a right triangle with the first outer line (211) and the second outer line (212),
the first outer line (211) and the second outer line (212) form a right angle of the right triangle, and
the reference line (RL) corresponds to a hypotenuse of the right triangle.

8. The battery tape (100) as claimed in claim 6 or 7, wherein the reference line (RL) forms the angle between 45 degrees to 60 degrees with the first outer line (211).

9. The battery tape (100) as claimed in claim 6, 7 or 8, wherein the center of the reference line (RL) is spaced from the second outer line (212) by a length of 5% to 15% with respect to a length of the first outer line (211).

10. The battery tape (100) as claimed in any one of claims 6 to 9, wherein a length (L2) of the notch portion (230) is greater than 0% and less than or equal to 70% with respect to a length (L1) of the reference line (RL).

11. The battery tape (100) as claimed in claim 10, wherein the notch portion (230) has a symmetrical shape with respect to the center (C) of the reference line (RL).

12. The battery tape (100) as claimed in any preceding claim, wherein the notch portion (230) extends in one direction, and opposite ends of the notch portion (230) are rounded.

13. The battery tape (100) as claimed in any preceding claim, wherein the base attachment portion (200) has a rectangular shape, and
the plurality of corner regions has four corner regions, the notch portion (230) located in at least one of the four corner regions of the plurality of corner regions of the base attachment portion (200).

14. A battery (10) comprising:
a battery cell (20); and
a battery tape (100) attached to the battery cell (20),
wherein the battery tape (100) is a battery tape (100) according to any one of claims 1 to 13.

15. The battery (10) as claimed in claim 14, further comprising a set tape (30) attached to an opposite surface of the base attachment portion (200) from that attached to the first surface (21) of the battery cell (20).
